# EUROPEAN PATENT SPECIFICATION

(11) **EP 3 378 977 B1**
(45) Date of publication and mention of the grant of the patent: **06.12.2023**
(21) Application number: 16865598.3
(22) Date of filing: 08.09.2016
(51) Int. Cl.: D01F 6/74, D01F 6/78, C08G 73/10, D01D 5/06

(54) **POLYIMIDE FIBER AND PREPARATION METHOD THEREFOR**
POLYIMIDFASER UND HERSTELLUNGSVERFAHREN DAFÜR
FIBRE DE POLYIMIDE ET SON PROCÉDÉ DE PRÉPARATION

(30) Priority: 17.11.2015 CN 201510790613
(43) Date of publication of application: 26.09.2018
(73) Proprietor: Changchun Institute Of Applied Chemistry Chinese Academy Of Sciences, Changchun, Jilin 130022 (CN)
(72) Inventor: QIU, Xuepeng, Changchun Jilin 130022 (CN); DAI, Xuemin, Changchun Jilin 130022 (CN); LI, Guomin, Changchun Jilin 130022 (CN); DONG, Zhixin, Changchun Jilin 130022 (CN); LIU, Fangfang, Changchun Jilin 130022 (CN); JI, Xiangling, Changchun Jilin 130022 (CN); GAO, Lianxun, Changchun Jilin 130022 (CN)
(74) Representative: Hoffmann Eitle
(86) International application number: PCT/CN2016/098433
(87) International publication number: WO 2017/084420

(56) References cited:
- CN-A- 101 338 462
- CN-A- 102 041 576
- CN-A- 102 219 747
- CN-A- 105 297 166
- US-A- 5 378 420
- US-A1- 2013 137 846

## Description

### TECHNICAL FIELD

This invention relates to the technical field of materials, and particularly to a polyimide fiber and a preparation method thereof.

### BACKGROUND ART

A polyimide fiber is one of high-performance fibers, and has a plurality of excellent properties, such as high strength, high modulus, good resistance to high temperature, good resistance to low temperature, good flame resistance, good resistance to chemical corrosion, good irradiation resistance, etc. It has been widely used in various fields, such as aerospace, national defense construction, ocean exploitation, sports equipment, protective tools, cables, nuclear industry, composite materials, fireproof and flame-retardant materials, etc.

Existing preparation methods for polyimide fibers include a one-step method and a two-step method. The one-step method refers to a method in which a polyimide solution is used to directly perform spinning, a fiber is preliminarily drawn to have a certain strength, the solvent is removed, and thermal drawing and thermal treatment are performed. This method is advantageous in that imidization is not required for precursor fiber to be prepared, the process flow is short, and the polyimide fiber obtained has relatively high mechanical properties. This method for preparing a polyimide fiber has been disclosed in Chinese Patent No. ZL 02112048.X and US Patent Application Nos. US 4,370,290 and US 5,378,420. However, although the polyimide fiber prepared by the one-step method has properties of high strength and high modulus, it is disadvantageous for industrial applications due to the high toxicity of the solvent and the limit of the polymer structure.

The two-step method is a method in which diamine and dianhydride are first subjected to a polycondensation reaction to generate a polyamic acid solution, which is then spun to obtain a polyamic acid fiber, and the polyamic acid fiber is further subjected to processes of imidization, thermal drawing, and the like to finally obtain a polyimide fiber. This method for preparing a polyimide fiber has been disclosed in Japanese Patents JP03287815 and JP04018115 and Chinese Patent CN101338462B. This method is advantageous in that processability challenges caused by insolubility and infusibility of the polyimide are solved, there are many types of low-toxicity raw materials and solvents for synthesis, and the fiber has a low residue of solvents, and it is suitable for industrial production. However, although the two-step method solves difficulties in processability caused by insolubility and infusibility of the polyimide and the problem of the high toxicity of the solvent, the fiber prepared has relatively low mechanical properties.

US 20130137846 A1 describes a high-strength high-modulus polyimide fiber comprising polyimide fiber obtained from random copolymerization of 3,3',4,4'-benzophenone tetracarboxylic dianhydride (BPDA), p-phenylenediamine (pPDA) and 2-(4-aminophenyl)-lH-benzimidazol-5-amine (BIA), wherein molar ratio between pPDA and BIA is 1:10-3:1. CN 102041576 A describes polyimide fibers and a method for preparing the polyimide fibers, comprising mixing diamine, 2-(2- hydroxyl-4-aminophenyl)-5-aminobenzimidazole and dianhydride in an organic solvent to perform polycondensation to obtain polyamic acid spinning solution; spinning polyimide protofilaments with the polyamic acid spinning solution; performing imidization on the polyimide protofilaments to obtain polyimide protofibres; and performing thermal drawing treatment of the polyimide fibers to obtain polyimide fibers. CN 102219747 A describes a synthesis method of aromatic diamine containing double imidazole rings.

### SUMMARY OF THE INVENTION

In view of this, the technical problem to be solved by this invention is to provide a polyimide fiber and a preparation method thereof. The polyimide fiber provided by this invention has good mechanical properties and is resistant to high temperature.

This invention provides a polyimide fiber prepared from a dianhydride compound and a diamine compound, wherein said diamine compound is selected from one or more of: 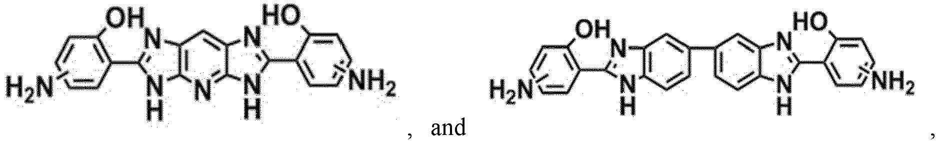 and
said diamine compound further comprises one or more of: 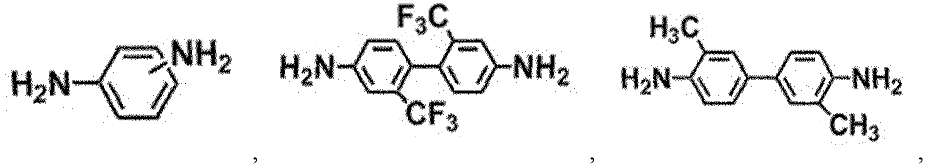 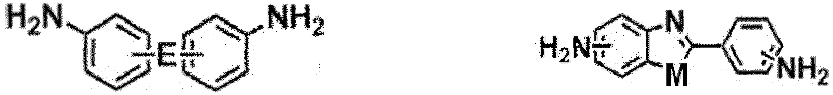 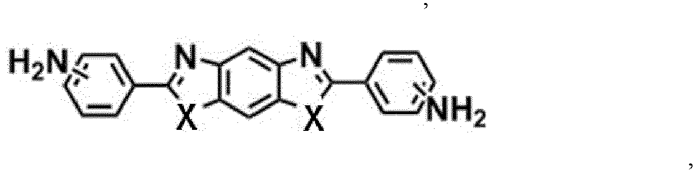 , and 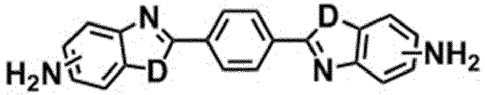
, wherein -M- is selected from one or more of -O-, -S-, and -NH-; -X- is selected from one or more of -O-, -S-, and -NH-; -D- is selected from one or more of -O-, -S-, and -NH-; and E is selected from one or more of -O-, -S-, -SO₂-, -CH₂-, -C(CF₃)₂-, -CO-,

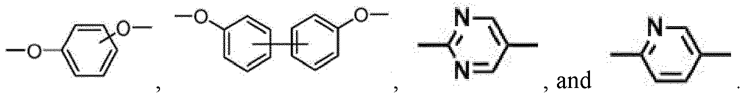

Preferably, said dianhydride compound is selected from one or more of: 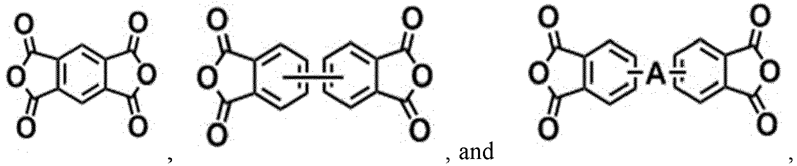 wherein said -A- is selected from -S-, -O-,

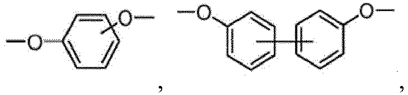

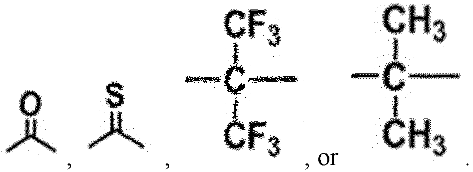

Preferably, the molar ratio of said dianhydride compound to said diamine compound is 1:(0.8-1.2).

This invention also provides a preparation method for a polyimide fiber, comprising the steps of:
A) subjecting a dianhydride compound and a diamine compound to a polymerization reaction to obtain a precursor polyamic acid solution; and
B) sequentially subjecting said precursor polyamic acid solution to spinning, imidization, and thermal drawing to obtain a polyimide fiber;
   wherein said diamine compound is selected from one or more of: 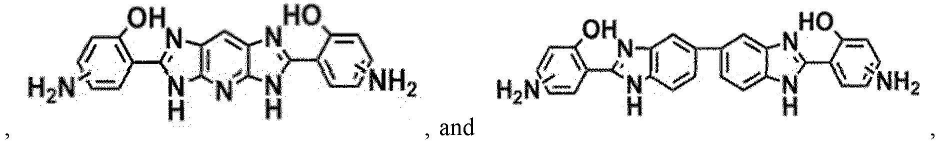 and
   said diamine compound further comprises one or more of: 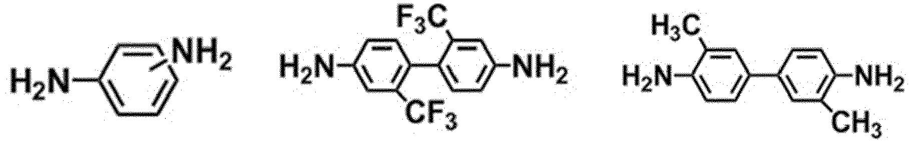 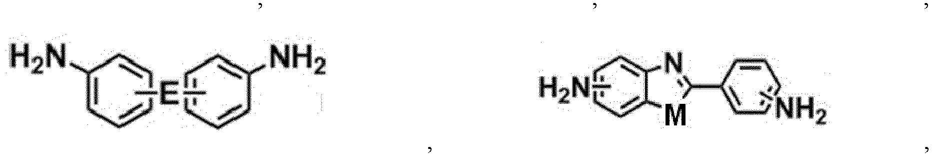 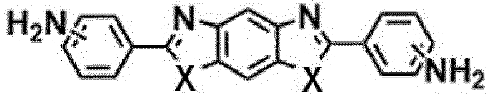 , and 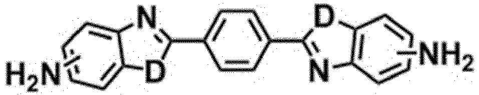
   , wherein -M- is selected from one or more of -O-, -S-, and -NH-; -X- is selected from one or more of -O-, -S-, and -NH-; -D- is selected from one or more of -O-, -S-, and -NH-; and E is selected from one or more of -O-, -S-, -SO₂-, -CH₂-, -C(CF₃)₂-, -CO-,

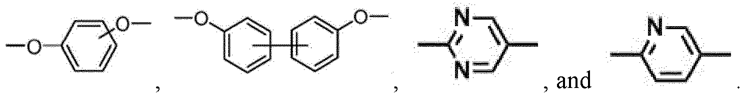

Preferably, said dianhydride compound is selected from one or more of: 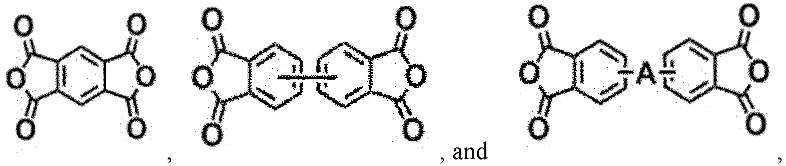 wherein said -A- is selected from -S-, -O-,

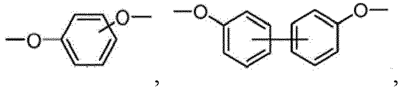

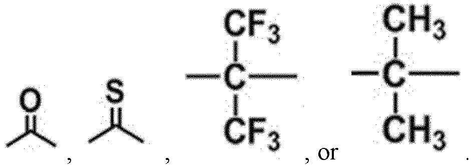

Preferably, the molar ratio of said dianhydride compound to said diamine compound is 1:(0.8-1.2).

Preferably, said spinning is wet spinning, wherein a spinneret for the wet spinning has an orifice size of Φ0.04-Φ0.4 mm and an orifice number of 10-10,000; a spinning draft ratio of the wet spinning is 1.1-6.0; and a speed of the wet spinning is 5-100 m/min.

Preferably, said spinning is dry-jet wet spinning, wherein a spinneret for the dry-jet wet spinning has an orifice size of Φ0.04-Φ0.4 mm and an orifice number of 10-10,000; a spinning draft ratio of the dry-jet wet spinning is 1.1-7.0; and a speed of the dry-jet wet spinning is 5-100 m/min.

Compared to the prior art, this invention provides a polyimide fiber prepared from a dianhydride compound and a diamine compound, wherein said diamine compound is selected from one or more of: 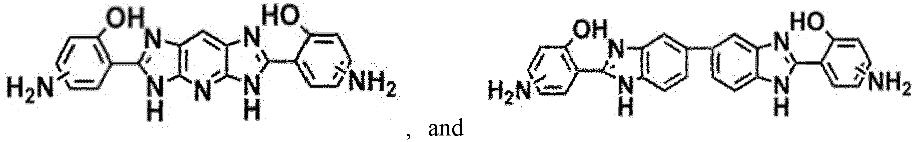 In this invention, a polyimide fiber is prepared by using a polyimide polymer system having a specific hydroxyl heterocyclic diamine copolymerization structure, and the prepared polyimide fiber has relatively high strength and modulus and is resistant to high temperature. Furthermore, the polyimide fiber prepared by this invention is provided with an active group on its surface, thus being easily adhered to various resin matrices, and the composite material prepared has good mechanical properties.

The results suggest that the polyimide fiber prepared by this invention has a strength of up to 5.1 GPa and a modulus up to 215.3 GPa. Under atmospheres of nitrogen and air, the polyimide fiber has 5 wt% thermal decomposition temperatures of 576°C and 540°C respectively and 10 wt% thermal decomposition temperatures of 595°C and 567°C respectively.

### DESCRIPTION OF DRAWINGS

Fig.1 is an electron microscope scanning image of the polyimide fiber prepared in Reference Example 1;
Fig.2 is a FT-IR spectrum of the polyimide fiber prepared in Reference Example 2;
Fig.3 is a TGA plot of the polyimide fiber prepared in Reference Example 5; and
Fig.4 is a DMA plot of the polyimide fiber prepared in Reference Example 6.

### DESCRIPTION OF EMBODIMENTS

This invention provides a polyimide fiber prepared from a dianhydride compound and a diamine compound, wherein said diamine compound is selected from one or more of: 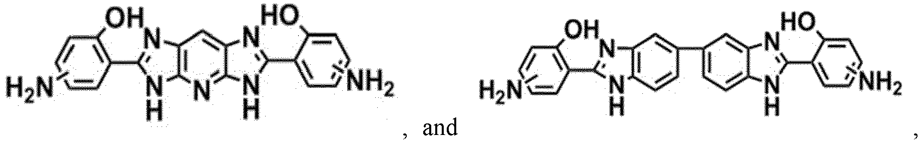 and
said diamine compound may further comprise one or more of 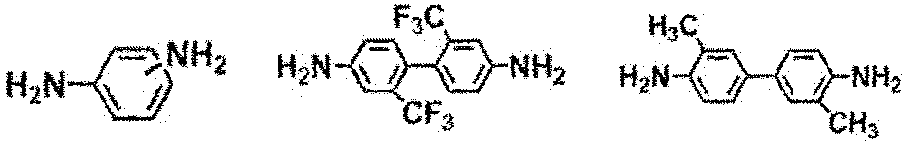 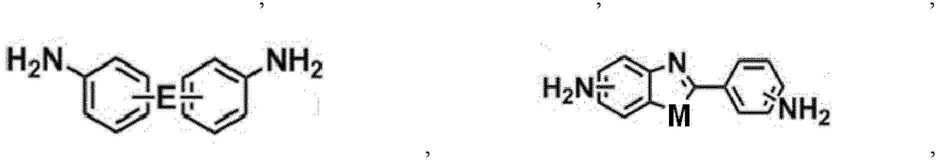 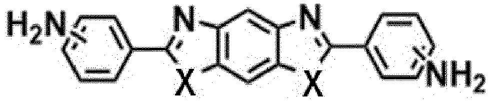 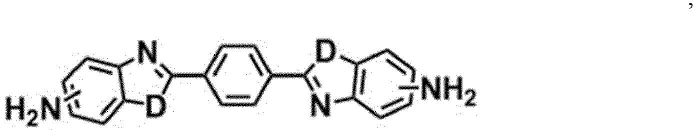 and
, wherein -M- is selected from one or more of -O-, -S-, and -NH-; -X- is selected from one or more of -O-, -S-, and -NH-; -D- is selected from one or more of -O-, -S-, and -NH-; and E is selected from one or more of -O-, -S-, -SO₂-, -CH₂-, -C(CF₃)₂-, -CO-,

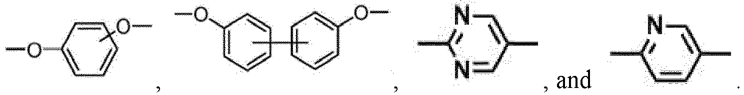

In some embodiments of this invention, said diamine compound is 2,2'-bis(2-hydroxyl-4-aminophenyl)-5,5'-bibenzo[1,2-d:1',2'-d']diimidazole. In other embodiments of this invention, said diamine compound is 5-amino-2-(2-hydroxyl-4-aminophenyl)benzimidazole. In other embodiments of this invention, said diamine compound is 5-amino-2-(2-hydroxyl-5-aminophenyl)benzimidazole. In other embodiments of this invention, said diamine compound is 5-amino-2-(2'-hydroxyl-4'-aminophenyl)benzimidazole. In other embodiments of this invention, said diamine compound is mixed diamine compounds of 5-amino-2-(2'-hydroxyl-4'-aminophenyl)benzimidazole and 5-amino-2-(4-aminophenyl)benzimidazole. In other embodiments of this invention, said diamine compound is mixed diamine compounds of 2,6-di(2-hydroxyl-4-aminophenyl)pyrido[1,2-d:5,4-d']diimidazole and 4,4'-oxydianiline. In other embodiments of this invention, said diamine compound is 2,5-di(5'-amino-benzimidazol-2'-yl)-1,4-benzenediol. In other embodiments of this invention, said diamine compound is mixed diamines of 5-amino-2-(2-hydroxyl-5-aminophenyl)benzimidazole and p-phenylenediamine.

In this invention, said dianhydride compound is selected from one or more of: 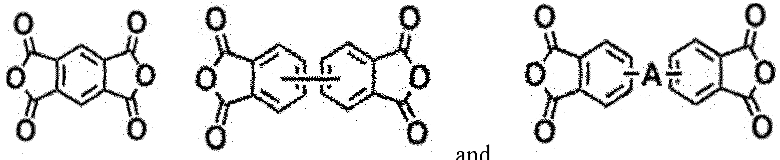 wherein said -A- is selected from -S-, -O-,

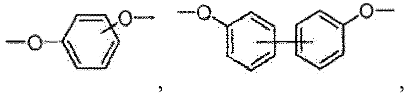

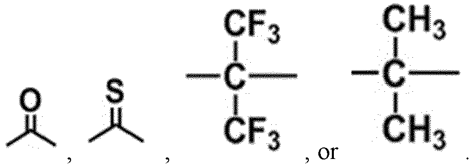

In some embodiments of this invention, said dianhydride compound is 4,4'-biphenyl dianhydride. In other embodiments of this invention, said dianhydride compound is pyromellitic dianhydride.

Preferably, the molar ratio of said dianhydride compound to said diamine compound is 1:(0.8-1.2), and more preferably 1:(0.9-1.1).

This invention also provides a preparation method for a polyimide fiber, comprising the steps of:
A) subjecting a dianhydride compound and a diamine compound to a polymerization reaction to obtain a precursor polyamic acid solution; and
B) sequentially subjecting said precursor polyamic acid solution to spinning, imidization, and thermal drawing to obtain a polyimide fiber.

In this invention, a dianhydride compound and a diamine compound are first subjected to a polymerization reaction to obtain a precursor polyamic acid solution.

Particularly, a dianhydride compound and a diamine compound are dissolved in a solvent, stirred, and subjected to a polymerization reaction to obtain a precursor polyamic acid solution. Here, the temperature of said polymerization reaction is in a range from -10°C to 40°C, and the duration of said polymerization reaction is 1-40 h. The molar ratio of said dianhydride compound to said diamine compound is 1:(0.8-1.2), and more preferably 1:(0.9-1.1). Said solvent is preferably one or more of polar aprotic solvents, and more preferably one or more of N,N-dimethylformamide, N,N-dimethylacetamide, dimethyl sulfoxide, and N-methylpyrrolidone.

Said diamine compound is selected from one or more of: 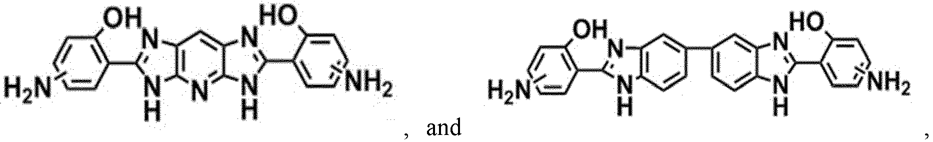 and
said diamine compound further comprises one or more of: 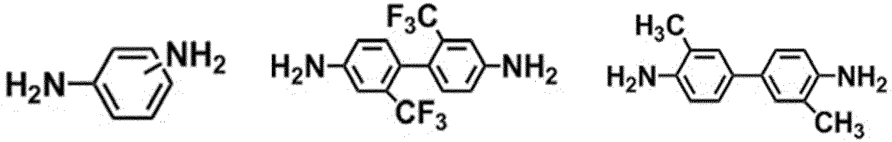 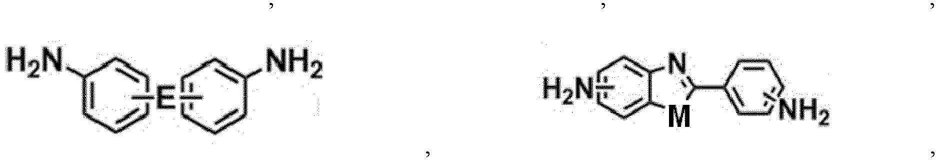 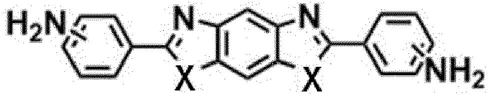 and 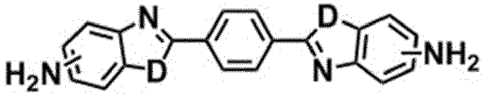
, wherein -M- is selected from one or more of -O-, -S-, and -NH-; -X- is selected from one or more of -O-, -S-, and -NH-; -D- is selected from one or more of -O-, -S-, and -NH-; and E is selected from one or more of -O-, -S-, -SO₂-, -CH₂-, -C(CF₃)₂-, -CO-,

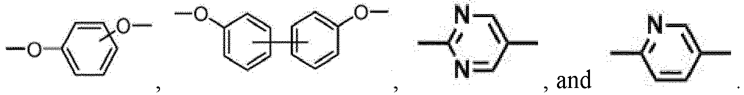

In some embodiments of this invention, said diamine compound is 2,2'-bis(2-hydroxyl-4-aminophenyl)-5,5'-bibenzo[1,2-d:1',2'-d']diimidazole. In other embodiments of this invention, said diamine compound is 5-amino-2-(2-hydroxyl-4-aminophenyl)benzimidazole. In other embodiments of this invention, said diamine compound is 5-amino-2-(2-hydroxyl-5-aminophenyl)benzimidazole. In other embodiments of this invention, said diamine compound is 5-amino-2-(2'-hydroxyl-4'-aminophenyl)benzimidazole. In other embodiments of this invention, said diamine compound is mixed diamine compounds of 5-amino-2-(2'-hydroxyl-4'-aminophenyl)benzimidazole and 5-amino-2-(4-aminophenyl)benzimidazole. In other embodiments of this invention, said diamine compound is mixed diamine compounds of 2,6-di(2-hydroxyl-4-aminophenyl)pyrido[1,2-d:5,4-d']diimidazole and 4,4'-oxydianiline. In other embodiments of this invention, said diamine compound is 2,5-di(5'-amino-benzimidazol-2'-yl)-1,4-benzenediol. In other embodiments of this invention, said diamine compound is mixed diamines of 5-amino-2-(2-hydroxyl-5-aminophenyl)benzimidazole and p-phenylenediamine.

In this invention, said dianhydride compound is selected from one or more of: 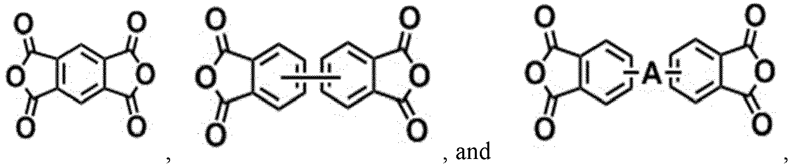 wherein said -A- is selected from -S-, -O-,

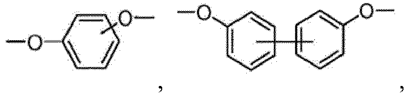

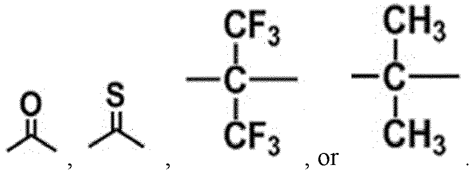

In some embodiments of this invention, said dianhydride compound is 4,4'-biphenyl dianhydride. In other embodiments of this invention, said dianhydride compound is pyromellitic dianhydride.

The concentration of said precursor polyamic acid solution finally obtained is preferably 5-35 wt%.

After the precursor polyamic acid solution is obtained, said precursor polyamic acid solution is sequentially subjected to spinning, imidization, and thermal drawing to obtain a polyimide fiber.

In this invention, said precursor polyamic acid solution is subjected to spinning to obtain a polyamic acid fiber. In this invention, said precursor polyamic acid solution is subjected to filtration and vacuum defoaming to obtain a spinning solution prior to spinning. In this invention, the methods for said filtration and vacuum defoaming are not particularly limited, as long as they are methods for filtration and vacuum defoaming well known to the person skilled in the art.

In this invention, the method for said spinning is preferably dry spinning, wet spinning, or dry-jet wet spinning. In this invention, the method for said spinning is not particularly limited, as long as it is a method for spinning well known to the person skilled in the art.

In this invention, said dry-jet wet spinning is preferably performed according to the method as follows.

A precursor polyamic acid solution is extruded from a spinneret orifice through a metering pump, passed through a section of an air layer, passed into a coagulating bath to be molded, passed through a water washing tank, and dried through a hot roller or a hot gas channel to obtain a polyamic acid fiber.

The coagulating bath used is preferably a mixture of water and one of methanol, ethanol, ethylene glycol, butanol, acetone, and butanone, or a mixture of water and one or more of N,N-dimethylformamide, N,N-dimethylacetamide, dimethyl sulfoxide, and N-methylpyrrolidone. The atmosphere for said drying is preferably an inert gas, and more preferably air, nitrogen gas, or argon gas. The height of said air layer is preferably 3-100 mm, and more preferably 10-80 mm; said dry-jet wet spinning has a spinneret with an orifice size of preferably Φ0.04-Φ0.4 mm, and more preferably Φ0.08-Φ0.20 mm; the orifice number is preferably 10-10,000, and more preferably 50-1,000; said dry-jet wet spinning has a spinning draft ratio of preferably 1.1-7.0, and more preferably 2-5; and said dry-jet wet spinning has a speed of preferably 5-100 m/min, and more preferably 10-90 m/min.

In this invention, said wet spinning is preferably performed according to the method as follows.

A precursor polyamic acid solution is extruded from a spinneret orifice through a metering pump, directly passed into a coagulating bath to be molded, passed through a water washing tank, and dried through a hot roller or a hot gas channel.

The coagulating bath used is preferably a mixture of water and one of methanol, ethanol, ethylene glycol, butanol, acetone, and butanone, or a mixture of water and one or more of N,N-dimethylformamide, N,N-dimethylacetamide, dimethyl sulfoxide, and N-methylpyrrolidone. The atmosphere for said drying is preferably an inert gas, and more preferably air, nitrogen gas, or argon gas. Said wet spinning has a spinneret with an orifice size of preferably Φ0.04-Φ0.4 mm, and more preferably Φ0.05-Φ0.12 mm; said wet spinning has an orifice number of 10-10,000, and more preferably 100-8,000; said wet spinning has a spinning draft ratio of preferably 1.1-6.0, and more preferably 2-5; and said wet spinning has a speed of preferably 5-100 m/min, and more preferably 10-90 m/min.

In this invention, dry spinning may also be used to spin a polyimide fiber. When a method of dry spinning is used to spin a polyimide fiber, a precursor polyamic acid solution is extruded via a spinneret, then molded through a hot air channel, and elongated and thinned under the action of winding tension to form a primary fiber. The procedure and the method of drawing are the same as technical solutions of the two methods of spinning described above.

In this invention, after the polyamic acid fiber is obtained, said polyamic acid fiber is subjected to imidization to obtain a polyimide fiber precursor.

Here, in this invention, the particular method for said imidization of the polyamic acid fiber is not particularly limited, as long as it is a method for imidization well known to the person skilled in the art. In this invention, imidization is preferably performed by using a gradient heating thermal treatment furnace or a constant temperature thermal treatment furnace.

The temperature of said gradient heating thermal treatment is preferably 50-500°C, and the heating rate is preferably 1-30°C/min. The temperature of said constant temperature treatment is 300-500°C, and the treatment time is 5-60 min. The atmosphere for said imidization is preferably an inert gas, and more preferably air, nitrogen gas, or argon gas.

After the polyimide fiber precursor is obtained, said polyimide fiber precursor is subjected to thermal drawing to obtain a polyimide fiber. In this invention, the method for said thermal drawing is not particularly limited, as long as it is a method for thermal drawing well known to the person skilled in the art. In this invention, the temperature of said thermal drawing is preferably 350-570°C, and more preferably 400-550°C; and the ratio of said thermal drawing is preferably 1.0-6.0, and more preferably 2-5. The atmosphere for said thermal drawing is preferably an inert gas, and more preferably air, nitrogen gas, or argon gas.

In this invention, a polyimide fiber is prepared by using a polyimide polymer system having a specific hydroxyl heterocyclic diamine copolymerization structure, and the prepared polyimide fiber has relatively high strength and modulus and is resistant to high temperature. Furthermore, the polyimide fiber prepared by this invention is provided with an active group on its surface, thus being easily adhered to various resin matrices, and the composite material prepared has good mechanical properties.

The results indicate that the polyimide fiber prepared by this invention has a strength of up to 5.1 GPa and a modulus up to 215.3 GPa. Under atmospheres of nitrogen and air, the polyimide fiber has 5 wt% thermal decomposition temperatures of 576°C and 540°C respectively and 10 wt% thermal decomposition temperatures of 595°C and 567°C respectively.

For further understanding of this invention, the polyimide fiber and the preparation method thereof provided by this invention are described in detail below in conjunction with Examples. The protection scope of this invention is not limited by the following Examples.

### Reference Example 1

448.49 g (1.0 mol) of 2,2'-bis(2-hydroxyl-4-aminophenyl)-5,5'-bibenzo[1,2-d:1',2'-d']diimidazole was dissolved in 3,800 ml of N,N-dimethylformamide, 294.22 g (1.0 mol) of 4,4'-biphenyl dianhydride was added with stirring, and reaction was performed at -10°C for 24 hours to obtain a light yellow viscous polyamic acid spinning solution, which was directly used as a spinning slurry after filtration.

The polyamic acid slurry described above was spun and molded by using a technical scheme of dry-jet wet spinning, and the spinning slurry at normal temperature was precisely metered with a metering pump, extruded from a spinneret orifice, passed through an air layer, and then passed into a coagulating bath of N,N-dimethylformamide and water (the volume ratio of N,N-dimethylformamide to water was 1:5). The spinneret had 100 orifices, the orifice size was Φ0.18 mm, the spinning draft ratio was 3.2, the spinning speed was 50 m/min, and the height of the air layer was 12 mm. The primary fiber was washed with water and then dried through a hot nitrogen gas channel to obtain a polyamic acid fiber.

The polyamic acid fiber was treated with a gradient heating thermal imidization furnace under an atmosphere of nitrogen gas to obtain a polyimide fiber. The temperature of the thermal imidization was increased from 50°C to 450°C at a heating rate of 5°C/min. Next, the polyimide fiber obtained was drawn at a drawing ratio of 1.3 under an atmosphere of nitrogen gas at 500°C to obtain a finished polyimide fiber.

The finished polyimide fiber which was 20 mm and had a modulus of 0.2-0.4% deformation was tested for properties 10 times by using a FAVIMAT tester for linear density, degree of crimp, and tensile strength of single fiber available from Textechno Corporation, Germany, and average values were employed. As a result, the fiber had a breaking strength of 4.0 GPa, a modulus of 155 GPa, and an elongation at break of 2.1%.

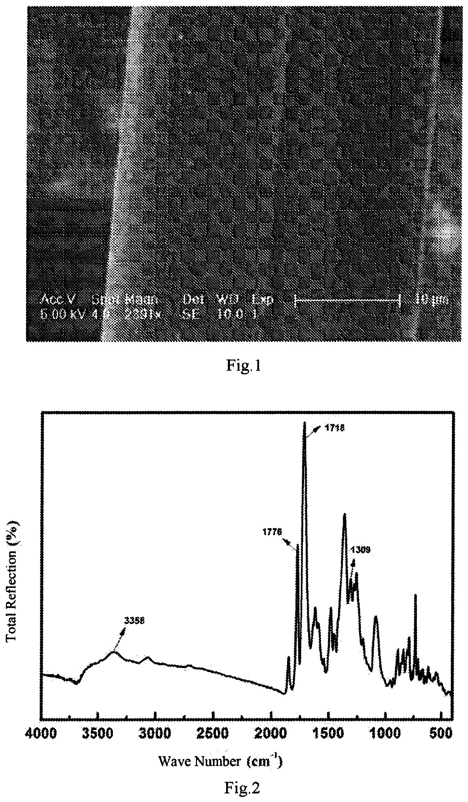

The polyimide fiber provided by this invention was subjected to electron microscope scanning, and the results can be seen in Fig.1. Fig.1 was an electron microscope scanning image of the polyimide fiber prepared in Reference Example 1.

The molecular structural formula of the polyimide fiber in this Example was as follow:

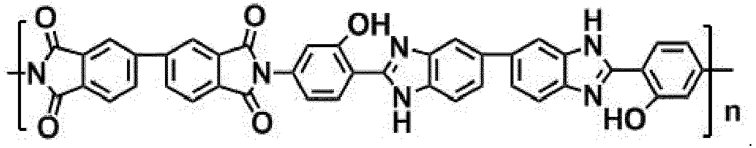

### Reference Example 2

240.27 g (1.0 mol) of 5-amino-2-(2-hydroxyl-4-aminophenyl)benzimidazole was dissolved in 3,700 ml of N,N-dimethylacetamide, 294.22 g (1.0 mol) of 4,4'-biphenyl dianhydride was added with stirring, and reaction was performed at 30°C for 24 hours to obtain a light yellow viscous polyamic acid spinning solution, which was directly used as a spinning slurry after filtration.

The polyamic acid slurry described above was spun and molded by using a technical scheme of dry-jet wet spinning, and the spinning slurry at normal temperature was precisely metered with a metering pump, extruded from a spinneret orifice, passed through an air layer, and then passed into a coagulating bath of N,N-dimethylacetamide and water (the volume ratio of N,N-dimethylacetamide to water was 1:2). The spinneret had 200 orifices, the orifice size was Φ0.18 mm, the spinning draft ratio was 3.8, the spinning speed was 60 m/min, and the height of the air layer was 15 mm. The primary fiber was washed with water and dried through a hot nitrogen gas channel to obtain a polyamic acid fiber.

The polyamic acid fiber was treated with a gradient heating thermal imidization furnace under an atmosphere of nitrogen gas to obtain a polyimide fiber. The temperature of thermal imidization was increased from 50°C to 400°C at a heating rate of 10°C/min. The polyimide fiber obtained was drawn at a drawing ratio of 1.3 under an atmosphere of nitrogen gas at 480°C to obtain a finished polyimide fiber.

The finished polyimide fiber which was 20 mm and had a modulus of 0.2-0.4% deformation was tested for properties 10 times by using a FAVIMAT tester for linear density, degree of crimp, and tensile strength of single fiber available from Textechno Corporation, Germany, and average values were employed. As a result, the fiber had a breaking strength of 3.6 GPa, a modulus of 118.2 GPa, and an elongation at break of 2.8%.

The polyimide fiber prepared in Reference Example 2 was subjected to Fourier transform infrared spectroscopic analysis, and the results can be seen in Fig.2. Fig.2 was a FT-IR spectrum of the polyimide fiber prepared in Reference Example 2. In Fig.2, 1776 cm⁻¹ was attributed to the symmetrical stretching vibration of a carbonyl group in an imine ring, 1718 cm⁻¹ was attributed to the asymmetric stretching vibration of a carbonyl group in an imine ring, 1309 cm⁻¹ was attributed to the stretching vibration of a benzimidazole ring, and 3358 cm⁻¹ was attributed to the stretching vibration of N-H in a benzimidazole ring. The result indicated that the polyimide fiber was successfully prepared in Reference Example 2.

The molecular structural formula of the polyimide fiber in this Example was as follow:

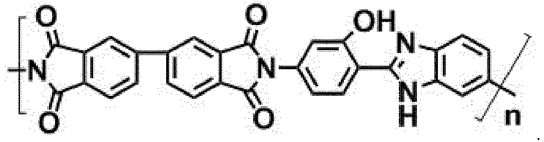

### Reference Example 3

240.27 g (1.0 mol) of 5-amino-2-(2-hydroxyl-5-aminophenyl)benzimidazole was dissolved in 3,500 ml of N,N-dimethylformamide, 294.22 g (1.0 mol) of 4,4'-biphenyl dianhydride was added with stirring, and reaction was performed at 30°C for 36 hours to obtain a light yellow viscous polyamic acid spinning solution, which was directly used as a spinning slurry after filtration.

The polyamic acid slurry described above was spun and molded by using a technical scheme of dry-jet wet spinning, and the spinning slurry at normal temperature was precisely metered with a metering pump, extruded from a spinneret orifice, passed through an air layer, and then passed into a coagulating bath of N,N-dimethylformamide and water (the volume ratio of N,N-dimethylformamide to water was 1:3.5). The spinneret had 200 orifices, the orifice size was Φ0.15 mm, the spinning draft ratio was 4.0, the spinning speed was 50 m/min, and the height of the air layer was 10 mm. The primary fiber was washed with water and dried through a hot nitrogen gas channel to obtain a polyamic acid fiber.

The polyamic acid fiber was treated with a gradient heating thermal imidization furnace under an atmosphere of nitrogen gas to obtain a polyimide fiber. The temperature of thermal imidization was increased from 50°C to 400°C at a heating rate of 5°C/min. The polyimide fiber obtained was drawn at a drawing ratio of 1.8 under an atmosphere of nitrogen gas at 500°C to obtain a finished polyimide fiber.

The finished polyimide fiber which was 20 mm and had a modulus of 0.2-0.4% deformation was tested for properties 10 times by using a FAVIMAT tester for linear density, degree of crimp, and tensile strength of single fiber available from Textechno Corporation, Germany, and average values were employed. As a result, the fiber had a breaking strength of 3.62 GPa, a modulus of 110.8 GPa, and an elongation at break of 3.2%.

The molecular structural formula of the polyimide fiber in this Example was as follow:

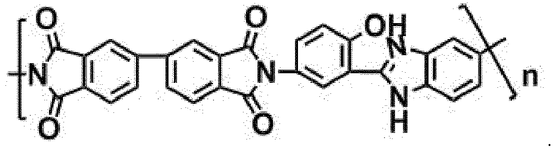

### Reference Example 4

180.20 g (0.750 mol) of 5-amino-2-(2'-hydroxyl-4'-aminophenyl)benzimidazole and 168.20 g (0.750 mol) of 5-amino-2-(4-aminophenyl)benzimidazole were dissolved in 4,000 ml of N-methylpyrrolidone, 308.93 g (1.05 mol) of 4,4'-biphenyl dianhydride was added with stirring, and reaction was performed at room temperature for 24 hours to obtain a light yellow viscous polyamic acid spinning solution, which was directly used as a spinning slurry after filtration.

The polyamic acid slurry described above was spun and molded by using dry-jet wet spinning, and the spinning slurry at normal temperature was precisely metered with a metering pump, extruded from a spinneret orifice, passed through an air layer, and then passed into a coagulating bath of N-methylpyrrolidone and water (in a volume ratio of 1:4). Here, the spinneret had 100 orifices, the orifice size was Φ0.08 mm, the spinning draft ratio was 3.0, the spinning speed was 50 m/min, and the height of the air layer was 15 mm. The primary fiber was washed with water and dried through a hot roller to obtain a polyamic acid fiber.

The polyamic acid fiber was treated with a gradient heating thermal imidization furnace under an atmosphere of nitrogen gas to obtain a primary polyimide fiber. The temperature of thermal imidization was increased from 50°C to 500°C at a heating rate of 10°C/min. The primary polyimide fiber was drawn at a drawing ratio of 2.1 under an atmosphere of nitrogen gas at 500°C to obtain a finished polyimide fiber.

The finished polyimide fiber which was 20 mm and had a modulus of 0.2-0.4% deformation was tested for properties 10 times by using a FAVIMAT tester for linear density, degree of crimp, and tensile strength of single fiber available from Textechno Corporation, Germany, and average values were employed. As a result, the fiber had a breaking strength of 5.10 GPa, a modulus of 215.3 GPa, and an elongation at break of 2.2%.

The molecular structural formula of the polyimide fiber in this Example was as follow:

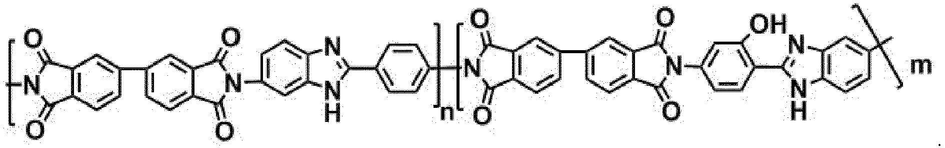

### Reference Example 5

360.41 g (1.5 mol) of 5-amino-2-(2-hydroxyl-5-aminophenyl)benzimidazole was dissolved in 4,500 ml of N,N-dimethylacetamide, 163.66 g (0.75 mol) of pyromellitic dianhydride and 220.67 g (0.75 mol) of 4,4'-biphenyl dianhydride were added with stirring, and reaction was performed at -10°C for 24 hours to obtain a light yellow viscous polyamic acid spinning solution, which was directly used as a spinning slurry after filtration.

The polyamic acid slurry described above was spun and molded by using a technical scheme of wet spinning, and the spinning slurry at normal temperature was precisely metered with a metering pump, extruded from a spinneret orifice, and then directly passed into a coagulating bath of N,N-dimethylacetamide and water (in a volume ratio of 1:5). The spinneret had 200 orifices, the orifice size was Φ0.15 mm, the spinning draft ratio was 3.6, and the spinning speed was 65 m/min. The primary fiber was washed with water and dried through a hot nitrogen gas channel to obtain a polyamic acid fiber.

The polyamic acid fiber was treated with a gradient heating thermal imidization furnace under an atmosphere of nitrogen gas to obtain a polyimide fiber. The temperature of thermal imidization was increased from 50°C to 450°C at a heating rate of 5°C/min. The polyimide fiber obtained was drawn at a drawing ratio of 1.3 under an atmosphere of nitrogen gas at 520°C to obtain a finished polyimide fiber.

The finished polyimide fiber which was 20 mm and had a modulus of 0.2-0.4% deformation was tested for properties 10 times by using a FAVIMAT tester for linear density, degree of crimp, and tensile strength of single fiber available from Textechno Corporation, Germany, and average values were employed. As a result, the fiber had a breaking strength of 4.6 GPa, a modulus of 211.5 GPa, and an elongation at break of 2.1%.

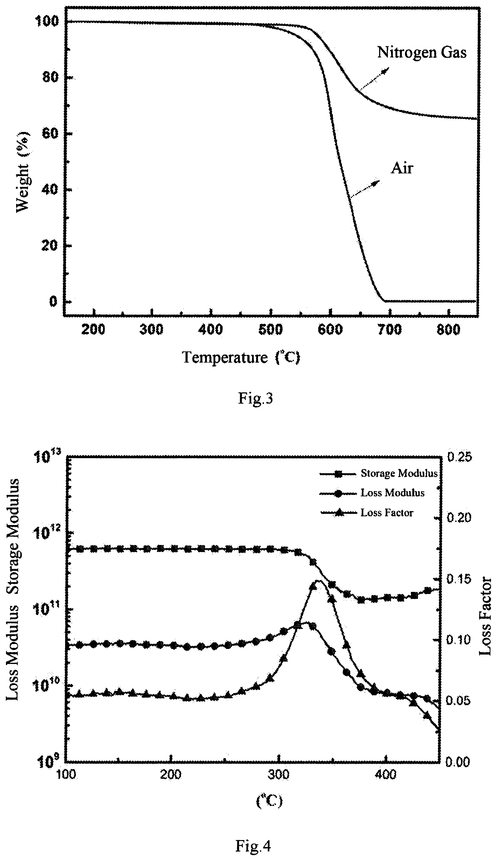

The thermal decomposition property of the polyimide fiber described above was measured, and the results can be seen in Fig.3. Fig.3 is a TGA plot of the polyimide fiber prepared in Reference Example 5. The results indicated that under atmospheres of nitrogen and air, the polyimide fiber prepared in Reference Example 5 had 5 wt% thermal decomposition temperatures of 576°C and 540°C respectively and 10 wt% thermal decomposition temperatures of 595°C and 567°C respectively.

The molecular structural formula of the polyimide fiber in this Example was as follow:

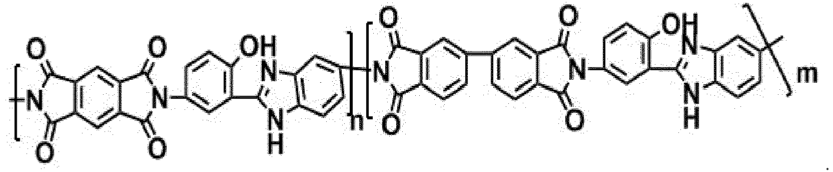

### Reference Example 6

180.20 g (0.750 mol) of 5-amino-2-(2-hydroxyl-4-aminophenyl)benzimidazole and 150.18 g (0.750 mol) of 4,4'-oxydianiline were dissolved in 3,500 ml of N,N-dimethylformamide, 441.34 g (1.50 mol) of 4,4'-biphenyl dianhydride was added with stirring, and reaction was performed at room temperature for 10 hours to obtain a light yellow viscous polyamic acid spinning solution, which was directly used as a spinning slurry after filtration.

The polyamic acid slurry described above was spun and molded by using a technical scheme of dry-jet wet spinning, and the spinning slurry at normal temperature was precisely metered with a metering pump, extruded from a spinneret orifice, passed through an air layer, and then passed into a coagulating bath of N,N-dimethylformamide and water (in a volume ratio of 1:3.2). The spinneret had 100 orifices, the orifice size was Φ0.18 mm, the spinning draft ratio was 3.8, the spinning speed was 30 m/min, and the height of the air layer was 10 mm. The primary fiber was washed with water and dried through a hot nitrogen gas channel to obtain a polyamic acid fiber.

The polyamic acid fiber was treated with a gradient heating thermal imidization furnace under an atmosphere of nitrogen gas to obtain a polyimide fiber. The temperature of thermal imidization was increased from 50°C to 400°C at a heating rate of 5°C/min. The polyimide fiber obtained was drawn at a drawing ratio of 2.8 under an atmosphere of nitrogen gas at 510°C to obtain a finished polyimide fiber.

The finished polyimide fiber which was 20 mm and had a modulus of 0.2-0.4% deformation was tested for properties 10 times by using a FAVIMAT tester for linear density, degree of crimp, and tensile strength of single fiber available from Textechno Corporation, Germany, and average values were employed. As a result, the fiber had a breaking strength of 3.3 GPa, a modulus of 113.1 GPa, and an elongation at break of 2.8%.

The glass transition temperature of the polyimide fiber described above was measured, and the results can be seen in Fig.4. Fig.4 is a DMA plot of the polyimide fiber prepared in Reference Example 6. It can be seen from the tanδ plot that the glass transition temperature of the polyimide fiber in Reference Example 6 was 338°C.

The molecular structural formula of the polyimide fiber in this Example was as follow:

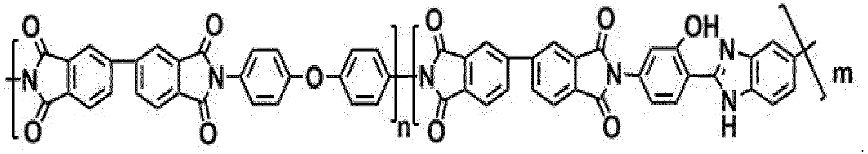

### Reference Example 7

180.20 g (0.750 mol) of 5-amino-2-(2-hydroxyl-4-aminophenyl)benzimidazole and 180.22 g (0.750 mol) of 5-amino-2-(2-hydroxyl-5-aminophenyl)benzimidazole was dissolved in 5,000 ml of N,N-dimethylacetamide, 441.34 g (1.50 mol) of 4,4'-biphenyl dianhydride was added with stirring, and reaction was performed at room temperature for 24 hours to obtain a light yellow viscous polyamic acid spinning solution, which was directly used as a spinning slurry after filtration.

The polyamic acid slurry described above was spun and molded by using a technical scheme of dry-jet wet spinning, and the spinning slurry at normal temperature was precisely metered with a metering pump, extruded from a spinneret orifice, passed through an air layer, and then passed into a coagulating bath of N,N-dimethylacetamide and water (in a volume ratio of 1:3.3). The spinneret had 200 orifices, the orifice size was Φ0.12 mm, the spinning draft ratio was 3.6, the spinning speed was 50 m/min, and the height of the air layer was 10 mm. The primary fiber was washed with water and dried through a hot nitrogen gas channel to obtain a polyamic acid fiber.

The polyamic acid fiber was treated with a gradient heating thermal imidization furnace under an atmosphere of nitrogen gas to obtain a polyimide fiber. The temperature of thermal imidization was increased from 50°C to 400°C at a heating rate of 10°C/min. The polyimide fiber obtained was drawn at a drawing ratio of 2.2 under an atmosphere of nitrogen gas at 490°C to obtain a finished polyimide fiber.

The finished polyimide fiber which was 20 mm and had a modulus of 0.2-0.4% deformation was tested for properties 10 times by using a FAVIMAT tester for linear density, degree of crimp, and tensile strength of single fiber available from Textechno Corporation, Germany, and average values were employed. As a result, the fiber had a breaking strength of 4.1 GPa, a modulus of 152.6 GPa, and an elongation at break of 2.1%.

The molecular structural formula of the polyimide fiber in this Example was as follow:

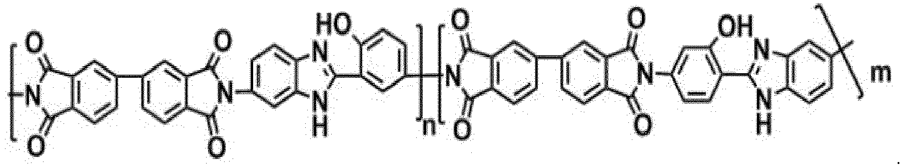

### Example 8

186.69 g (0.50 mol) of 2,6-di(2-hydroxyl-4-aminophenyl)pyrido[1,2-d:5,4-d']diimidazole and 100.12 g (0.50 mol) of 4,4'-oxydianiline were dissolved in 4,300 ml of N-methylpyrrolidone, 294.22 g (1.0 mol) of 4,4'-biphenyl dianhydride was added with stirring, and reaction was performed at room temperature for 24 hours to obtain a reddish brown viscous polyamic acid spinning solution, which was directly used as a spinning slurry after filtration.

The polyamic acid slurry described above was spun and molded by using wet spinning, and the spinning slurry at normal temperature was precisely metered with a metering pump, extruded from a spinneret orifice, and then passed into a coagulating bath of N-methylpyrrolidone and water (in a volume ratio of 1:2.5). The spinneret had 500 orifices, the orifice size was Φ0. 18 mm, the spinning draft ratio was 3.2, and the speed was 50 m/min. The primary fiber was washed with water and dried through a hot air channel to obtain a polyamic acid fiber.

The polyamic acid fiber was treated with a gradient heating thermal imidization furnace under an atmosphere of air to obtain a polyimide fiber. The temperature of thermal imidization was increased from 50°C to 400°C at a heating rate of 10°C/min. The polyimide fiber obtained was drawn at a drawing ratio of 2.0 under an atmosphere of air at 520°C to obtain a finished polyimide fiber. The fiber had a breaking strength of 4.7 GPa, a modulus of 212.4 GPa, and an elongation at break of 1.8%.

The molecular structural formula of the polyimide fiber in this Example was as follow:

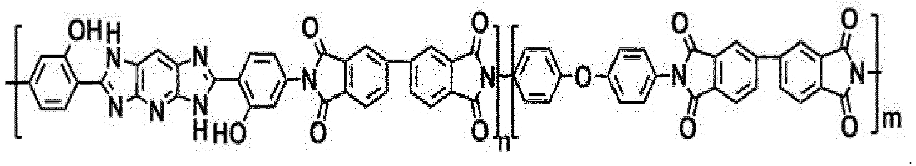

### Reference Example 9

558.59 g (1.5 mol) of 2,5-di(5'-amino-benzimidazol-2'-yl)-1,4-benzenediol was dissolved in 5,300 ml of N,N-dimethylacetamide, 220.67 g (0.75 mol) of 4,4'-biphenyl dianhydride and 163.67 g (0.75 mol) of pyromellitic dianhydride were added with stirring, and reaction was performed at 20°C for 12 hours to obtain a light yellow viscous polyamic acid spinning solution, which was directly used as a spinning slurry after filtration.

The polyamic acid slurry described above was spun and molded by using dry-jet wet spinning, and the spinning slurry at normal temperature was precisely metered with a metering pump, extruded from a spinneret orifice, passed through an air layer, and then passed into a coagulating bath of N,N-dimethylacetamide and water (in a volume ratio of 1:6). The spinneret had 200 orifices, the orifice size was Φ0.15 mm, the spinning speed was 40 m/min, the spinning draft ratio was 2.80, and the height of the air layer was 20 mm. The primary fiber was washed with water and dried through a hot roller to obtain a polyamic acid fiber.

The polyamic acid fiber was treated with a gradient heating thermal imidization furnace under an atmosphere of nitrogen gas to obtain a polyimide fiber. The temperature of thermal imidization was increased from 50°C to 500°C at a heating rate of 10°C/min. The polyimide fiber obtained was drawn at a drawing ratio of 1.5 under an atmosphere of nitrogen gas at 530°C to obtain a finished polyimide fiber.

The finished polyimide fiber which was 20 mm and had a modulus of 0.2-0.4% deformation was tested for properties 10 times by using a FAVIMAT tester for linear density, degree of crimp, and tensile strength of single fiber available from Textechno Corporation, Germany, and average values were employed. As a result, the fiber had a breaking strength of 4.6 GPa, a modulus of 218.1 GPa, and an elongation at break of 2.1%.

The molecular structural formula of the polyimide fiber in this Example was as follow:

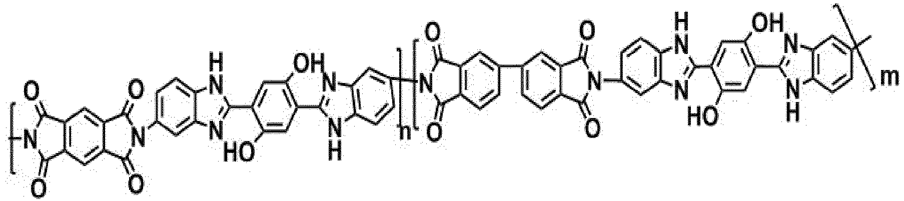

### Reference Example 10

180.20 g (0.750 mol) of 5-amino-2-(2-hydroxyl-5-aminophenyl)benzimidazole and 81.11 g (0.750 mol) of p-phenylenediamine were dissolved in 4,500 ml of N,N-dimethylformamide, 220.67 g (0.75 mol) of 4,4'-biphenyl dianhydride and 163.59 g (0.75 mol) of pyromellitic dianhydride were added with stirring, and reaction was performed at 30°C for 24 hours to obtain a light yellow viscous polyamic acid spinning solution, which was directly used as a spinning slurry after filtration.

The polyamic acid slurry described above was spun and molded by using a technical scheme of dry-jet wet spinning, and the spinning slurry at normal temperature was precisely metered with a metering pump, extruded from a spinneret orifice, passed through an air layer, and then passed into a coagulating bath of N-methylpyrrolidone and water (in a volume ratio of 1:3). The spinneret had 50 orifices, the orifice size was Φ0.12 mm, the spinning draft ratio was 3.6, the spinning speed was 40 m/min, and the height of the air layer was 5 mm. The primary fiber was washed with water and dried through a hot argon gas channel to obtain a polyamic acid fiber.

The polyamic acid fiber was treated with a gradient heating thermal imidization furnace under an atmosphere of argon gas to obtain a polyimide fiber. The temperature of thermal imidization was increased from 50°C to 400°C at a heating rate of 10°C/min. The polyimide fiber obtained was drawn at a drawing ratio of 1.2 under an atmosphere of argon gas at 530°C to obtain a finished polyimide fiber.

The finished polyimide fiber which was 20 mm and had a modulus of 0.2-0.4% deformation was tested for properties 10 times by using a FAVIMAT tester for linear density, degree of crimp, and tensile strength of single fiber available from Textechno Corporation, Germany, and average values were employed. As a result, the fiber had a breaking strength of 4.3 GPa, a modulus of 165.2 GPa, and an elongation at break of 2.2%.

The molecular structural formula of the polyimide fiber in this Example was as follow:

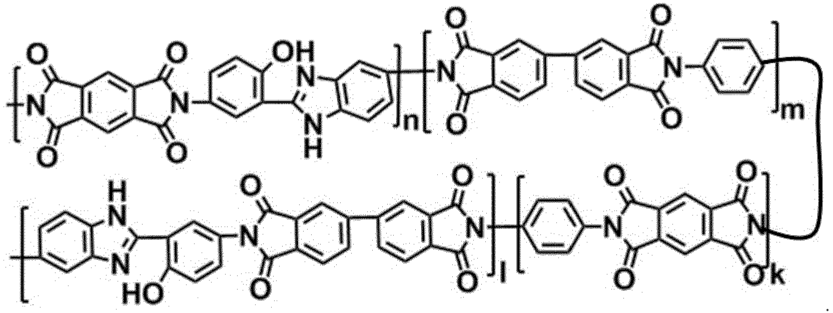

## Claims

1. A polyimide fiber prepared from a dianhydride compound and a diamine compound, wherein said diamine compound is selected from one or more of: 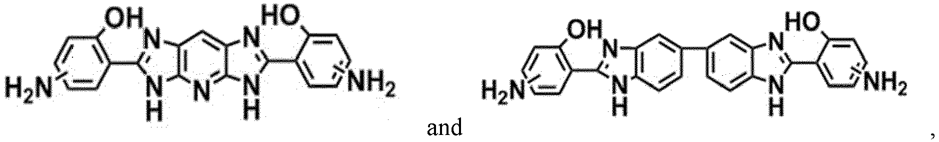 and
said diamine compound further comprises one or more of: 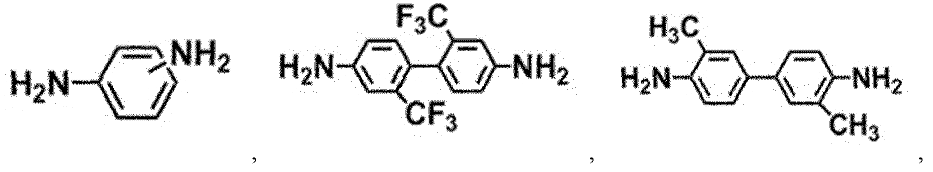 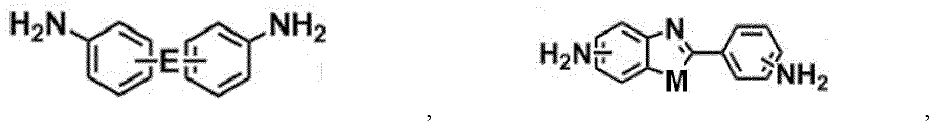 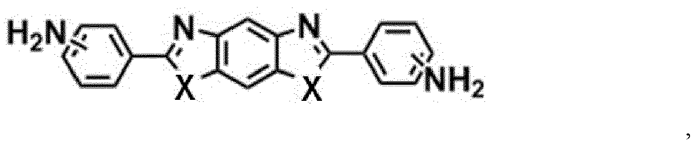 and 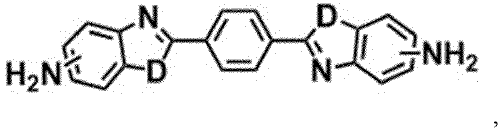
wherein -M- is selected from one or more of -O-, -S-, and -NH-; -X- is selected from one or more of -O-, -S-, and -NH-; -D- is selected from one or more of -O-, -S-, and -NH-; and E is selected from one or more of -O-, -S-, -SO₂-, -CH₂-, -C(CF₃)₂-, -CO-,

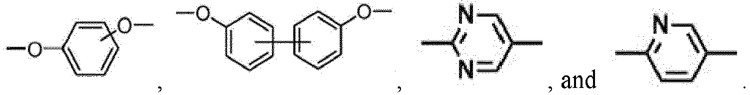

2. The polyimide fiber according to claim 1, **characterized in that** said dianhydride compound is selected from one or more of: 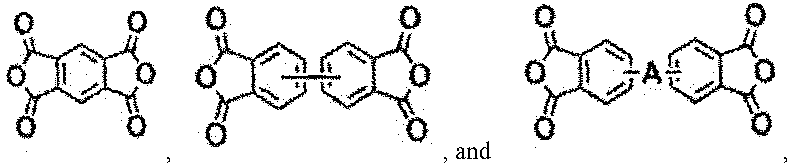 wherein said -A- is selected from -S-, -O-,

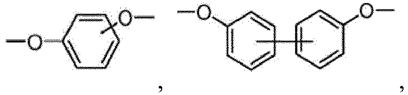

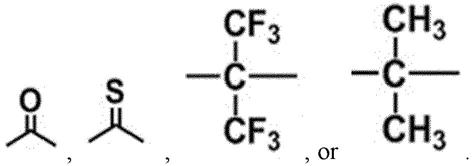

3. The polyimide fiber according to claim 1, **characterized in that** the molar ratio of said dianhydride compound to said diamine compound is 1:(0.8-1.2).

4. The polyimide fiber according to claim 1, **characterized in that** said polyimide fiber has a structure as shown below: 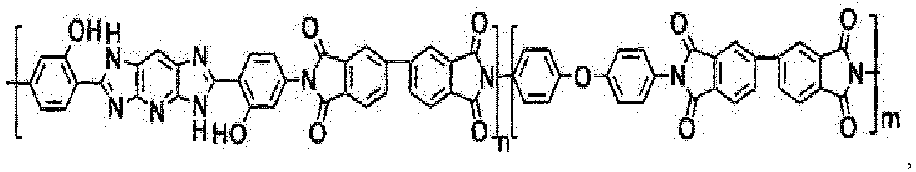 wherein each of n and m is a polymerization degree.

5. A preparation method for a polyimide fiber, comprising the steps of:
A) subjecting a dianhydride compound and a diamine compound to a polymerization reaction to obtain a precursor polyamic acid solution; and
B) sequentially subjecting said precursor polyamic acid solution to spinning, imidization, and thermal drawing to obtain a polyimide fiber;
wherein said diamine compound is selected from one or more of: 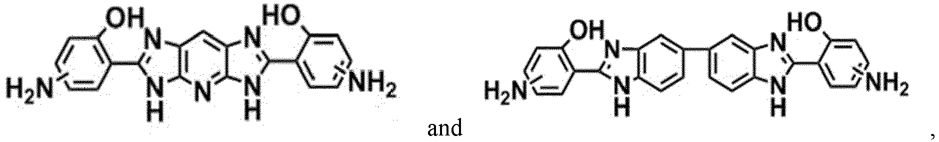 and
said diamine compound further comprises one or more of: 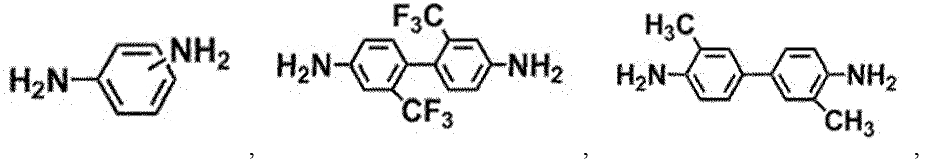 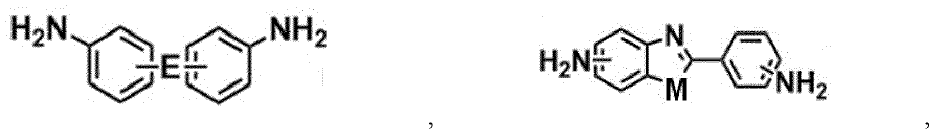 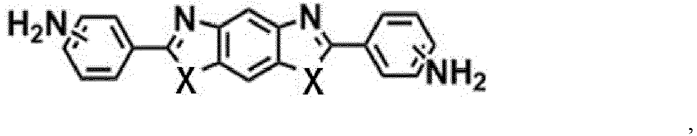 and 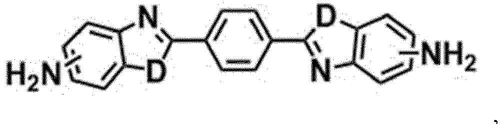
wherein -M- is selected from one or more of -O-, -S-, and -NH-; -X- is selected from one or more of -O-, -S-, and -NH-; -D- is selected from one or more of -O-, -S-, and -NH-; and E is selected from one or more of -O-, -S-, -SO₂-, -CH₂-, -C(CF₃)₂-, -CO-,

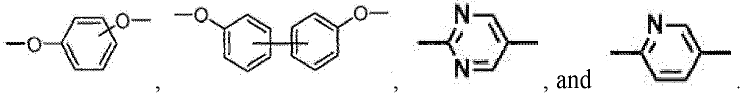

6. The preparation method according to claim 5, **characterized in that** said dianhydride compound is selected from one or more of: 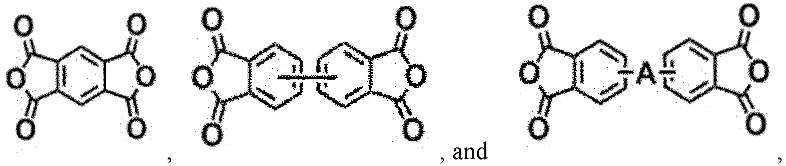 wherein said -A- is selected from -S-, -O-,

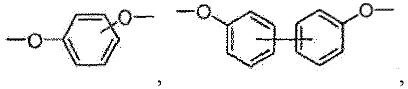

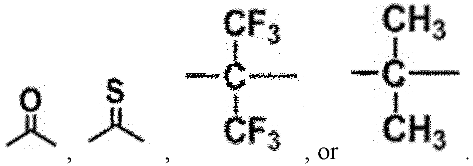

7. The preparation method according to claim 5, **characterized in that** the molar ratio of said dianhydride compound to said diamine compound is 1:(0.8-1.2).

8. The preparation method according to claim 5, **characterized in that** said spinning is wet spinning, wherein a spinneret for the wet spinning has an orifice size of Φ0.04-Φ0.4 mm and an orifice number of 10-10,000; a spinning draft ratio of the wet spinning is 1.1-6.0; and a speed of the wet spinning is 5-100 m/min.

9. The preparation method according to claim 5, **characterized in that** said spinning is dry-jet wet spinning, wherein a spinneret for the dry-jet wet spinning has an orifice size of Φ0.04-Φ0.4 mm and an orifice number of 10-10,000; a spinning draft ratio of the dry-jet wet spinning is 1.1-7.0; and a speed of the dry jet wet spinning is 5-100 m/min.

10. The preparation method according to claim 5, **characterized in that** the temperature for performing said polymerization reaction is in a range from -10°C to 40°C.

11. The preparation method according to claim 5, **characterized in that** said polymerization reaction is performed in an aprotic polar solvent.

12. The preparation method according to claim 11, **characterized in that** said aprotic polar solvent is selected from one or more of N,N-dimethylformamide, N,N-dimethylacetamide, dimethyl sulfoxide, and N-methylpyrrolidone.

13. The preparation method according to claim 5, **characterized in that** the concentration of said precursor polyamic acid solution is 5 wt%-35 wt%.

## Patentansprüche

1. Polyimidfaser hergestellt aus einer Dianhydridverbindung und einer Diaminverbindung, wobei die Diaminverbinung ausgewählt ist aus einer oder mehreren aus: 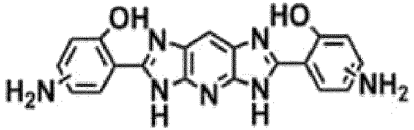 und 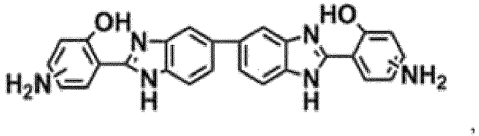 und
die Diaminverbindung ferner umfasst eine oder mehrere aus: 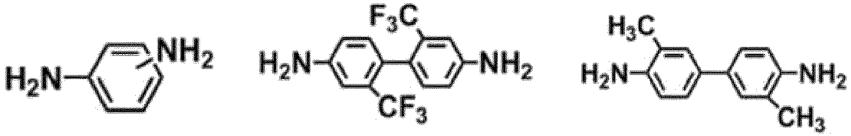 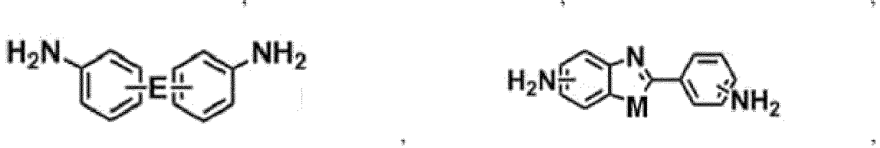 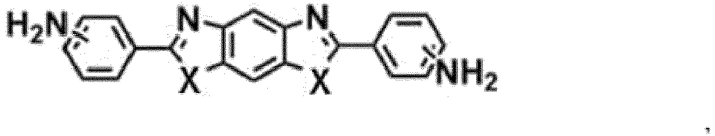 und 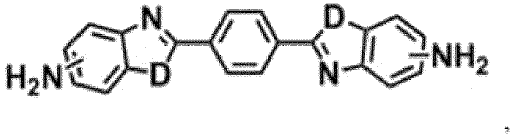
wobei -M- ausgewählt ist aus einem oder mehreren aus -O-, -S- und -NH-; -X- ist ausgewählt aus einem oder mehreren aus -O-, -S- und -NH-; -D- ist ausgewählt aus einem oder mehreren aus -O-, -S- und -NH-; und E ist ausgewählt aus einem oder mehreren aus -O-, -S-, -SO₂-, CH₂-, -C(CF₃)₂-, -CO-,

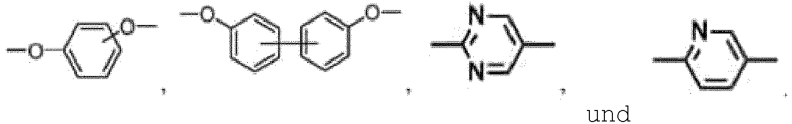

2. Polyimidfaser gemäß Anspruch 1, **dadurch gekennzeichnet, dass** die Dianhydridverbindung ausgewählt ist aus einer oder mehreren aus: 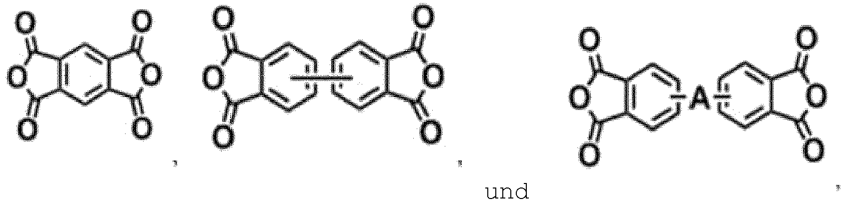 wobei -A- ausgewählt ist aus -S-, -O-,

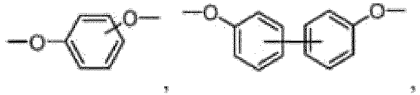

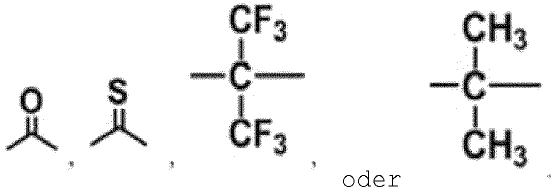

3. Polyimidfaser gemäß Anspruch 1, **dadurch gekennzeichnet, dass** das Molverhältnis der Dianhydridverbindung zur Diaminverbindung 1:(0,8-1,2) beträgt.

4. Polyimidfaser gemäß Anspruch 1, **dadurch gekennzeichnet, dass** die Polyimidfaser eine Struktur wie unten gezeigt aufweist: 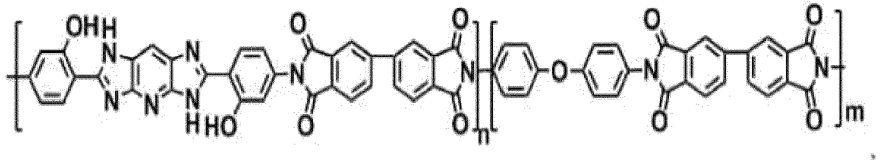 wobei jedes n und m ein Polymerisationsgrad ist.

5. Verfahren zur Herstellung einer Polyimidfaser, umfassend die Schritte:
A) Unterziehen einer Dianhydridverbindung und einer Diaminverbindung einer Polymerisationsreaktion, um eine Vorläufer-Polyamidsäurelösung zu erhalten; und
B) Sequentielles Unterziehen der Vorläufer-Polyamidsäurelösung Spinnen, Imidisieren und thermisches Ziehen, um eine Polyimidfaser zu erhalten;
wobei die Diaminverbindung ausgewählt ist aus einer oder mehreren aus: 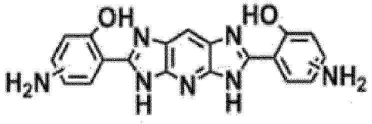 und 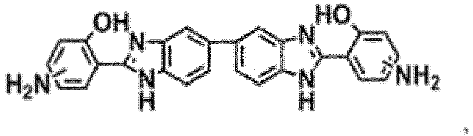 und
die Diaminverbindung ferner umfasst eine oder mehrere aus: 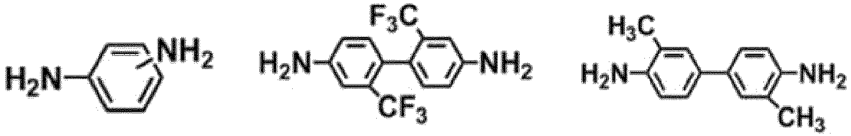 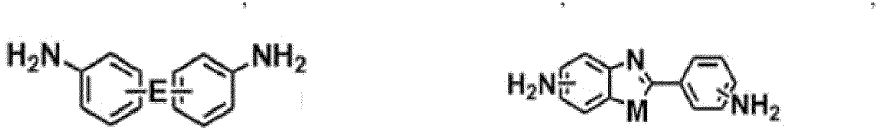 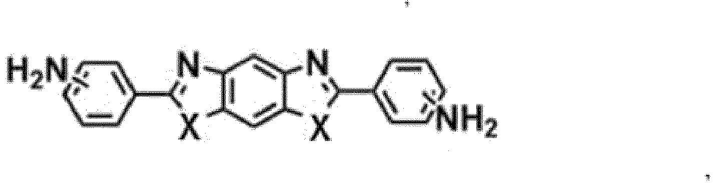 und 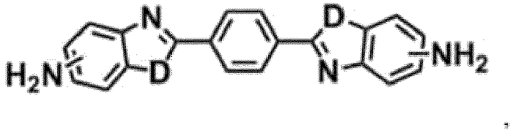
wobei -M- ausgewählt ist aus einem oder mehreren aus -O-, -S- und -NH-; -X- ist ausgewählt aus einem oder mehreren aus -O-, -S- und -NH-; -D- ist ausgewählt aus einem oder mehreren aus -O-, -S- und -NH-; und E ist ausgewählt aus einem oder mehreren aus -O-, -S-, -SO₂-, CH₂-, -C(CF₃)₂-, -CO-,

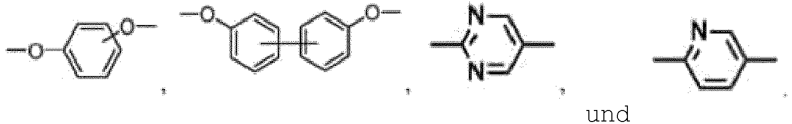

6. Herstellungsverfahren gemäß Anspruch 5, **dadurch gekennzeichnet, dass** die Dianhydridverbindung ausgewählt ist aus einer oder mehreren aus: 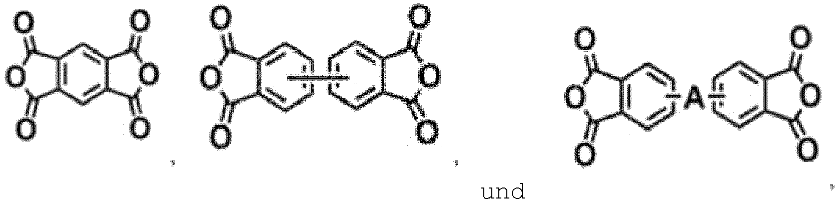 wobei -A- ausgewählt ist aus -S-, -O-,

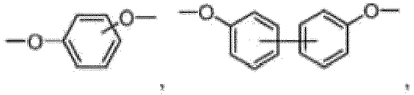

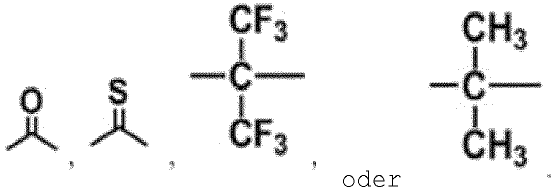

7. Herstellungsverfahren gemäß Anspruch 5, **dadurch gekennzeichnet, dass** das Molverhältnis der Dianhydridverbindung zur Diaminverbindung 1:(0,8-1,2) beträgt.

8. Herstellungsverfahren gemäß Anspruch 5, **dadurch gekennzeichnet, dass** das Spinnen Nassspinnen ist, wobei eine Spinndüse für das Nassspinnen eine Öffnungsgröße von Φ0,04- Φ0,4 mm und eine Öffnungszahl von 10-10.000 aufweist; ein Spinnstreckverhältnis des Nassspinnens ist 1,1-6,0; und eine Geschwindigkeit des Nassspinnens ist 5-100 m/min.

9. Herstellungsverfahren gemäß Anspruch 5, **dadurch gekennzeichnet, dass** das Spinnen Trockenstrahl-Nasspinnen (dry-jet wet spinning) ist, wobei eine Spinndüse für das Trockenstrahl-Nassspinnen eine Öffnungsgröße von Φ0,04- Φ0,4 mm und eine Öffnungszahl von 10-10.000 aufweist; ein Spinnstreckverhältnis des Trockenstrahl-Nassspinnens ist 1,1-7,0; und eine Geschwindigkeit des Trockenstrahl-Nassspinnens ist 5-100 m/min.

10. Herstellungsverfahren gemäß Anspruch 5, **dadurch gekennzeichnet, dass** die Temperatur zur Durchführung der Polymerisationsreaktion in einem Bereich von -10°C bis 40°C liegt.

11. Herstellungsverfahren gemäß Anspruch 5, **dadurch gekennzeichnet, dass** die Polymerisationsreaktion in einem aprotischen polaren Lösungsmittel durchgeführt wird.

12. Herstellungsverfahren gemäß Anspruch 11, **dadurch gekennzeichnet, dass** das aprotische polare Lösungsmittel ausgewählt ist aus einem oder mehreren aus N,N-Dimethylformamid, N,N-Dimethylacetamid, Dimethylsulfoxid und N-Methylpyrrolidon.

13. Herstellungsverfahren gemäß Anspruch 5, **dadurch gekennzeichnet, dass** die Konzentration der Vorläufer-Polyamidsäurelösung 5 Gew.-% - 35 Gew.-% beträgt.

## Revendications

1. Fibre de polyimide préparée à partir d'un composé de dianhydride et d'un composé de diamine, dans laquelle ledit composé de diamine choisi parmi un ou plusieurs de : 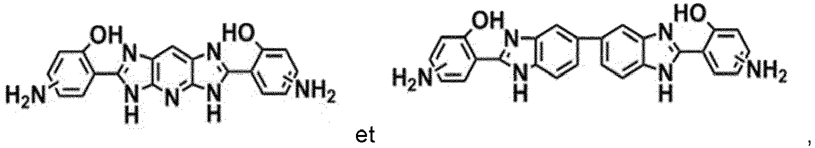 et
ledit composé de diamine comprend en outre un ou plusieurs de : 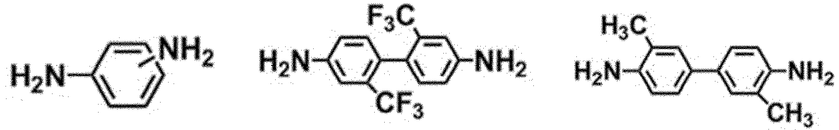 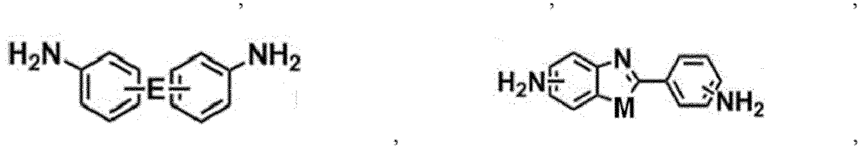 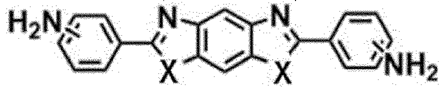 > et 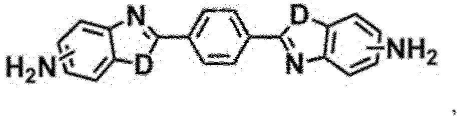
dans laquelle -M- est choisi parmi un ou plusieurs de -O-, -S-, et -NH- ; -X- est choisi parmi un ou plusieurs de -O-, -S-, et -NH- ; -D- est choisi parmi un ou plusieurs de -O-, -S-, et -NH- ; et E est choisi parmi un ou plusieurs de -O-, -S-, -SO₂-, -CH₂-, - C(CF₃)₂-, -CO-,

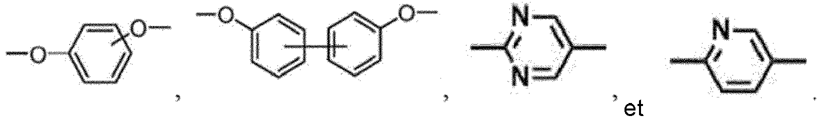

2. Fibre de polyimide selon la revendication 1, **caractérisée en ce que** ledit composé de dianhydride est choisi parmi un ou plusieurs de : 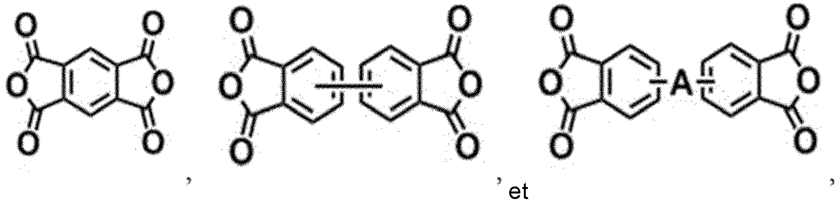 dans laquelle ledit -A- est choisi parmi -S-, -O-,

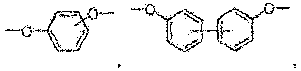

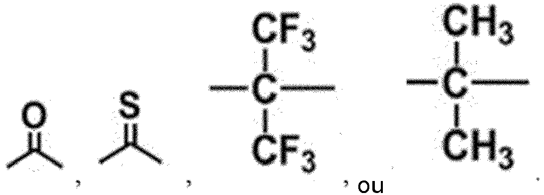

3. Fibre de polyimide selon la revendication 1, **caractérisée en ce que** le rapport molaire dudit composé de dianhydride sur ledit composé de diamine est de 1:(0,8-1,2).

4. Fibre de polyimide selon la revendication 1, **caractérisée en ce que** ladite fibre de polyimide présente une structure comme représentée ci-dessous : 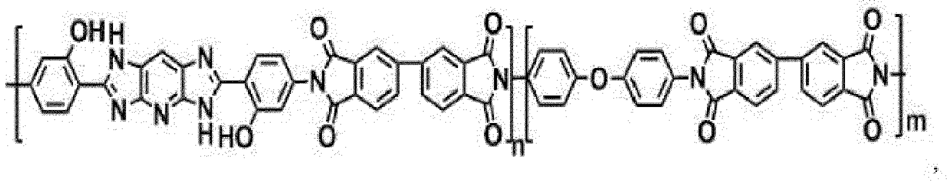 dans laquelle chacun de n et m est un degré de polymérisation.

5. Procédé de préparation d'une fibre de polyimide, comprenant les étapes de :
A) soumettre un composé de dianhydride et un composé de diamine à une réaction de polymérization pour obtenir une solution d'acide polyamique de précurseur ; et
B) soumettre de manière séquentielle ladite solution d'acide polyamique de précurseur à un filage, une imidisation et un étirage thermique pour obtenir une fibre de polyimide ;
dans lequel ledit composé de diamine est choisi parmi un ou plusieurs de : 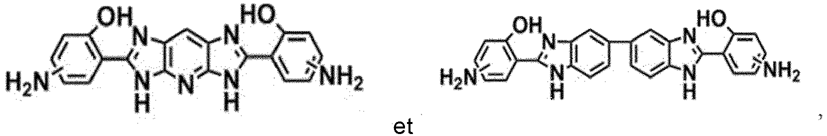 et ledit composé de diamine comprend en outre un ou plusieurs de : 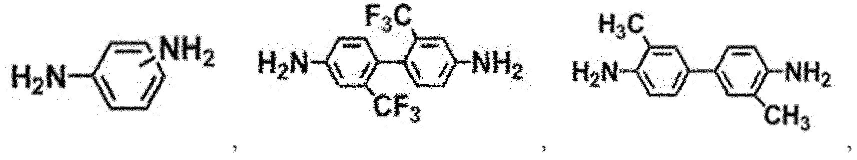 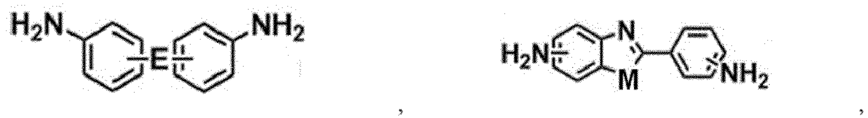 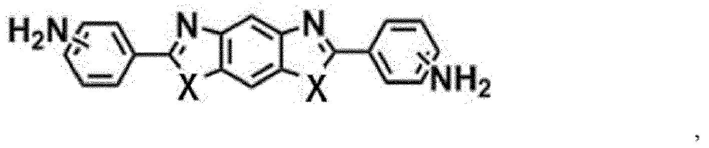 et 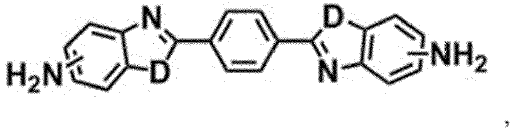
dans lequel -M- est choisi parmi un ou plusieurs de -O-, -S-, et -NH- ; -X- est choisi parmi un ou plusieurs de -O-, -S-, et -NH- ; -D- est choisi parmi un ou plusieurs de -O-, -S-, et -NH- ; et E est choisi parmi un ou plusieurs de -O-, -S-, -SO₂-, -CH₂-, - C(CF₃)₂-, -CO-,

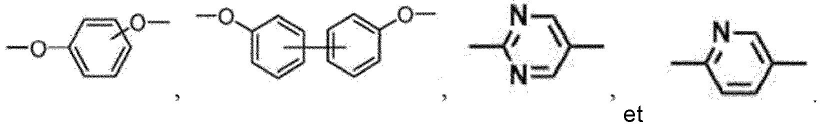

6. Procédé de préparation selon la revendication 5, **caractérisé en ce que** ledit composé de dianhydride est choisi parmi un ou plusieurs de : 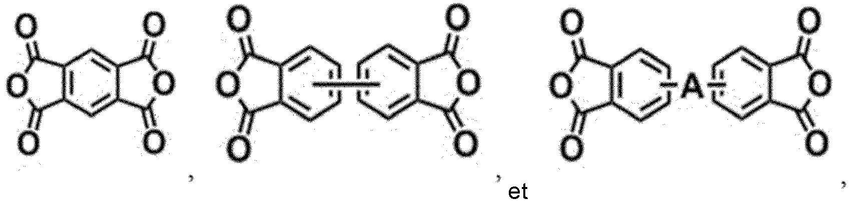 dans lequel ledit -A- est choisi parmi -S-, -O-,

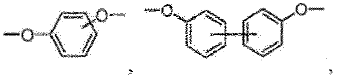

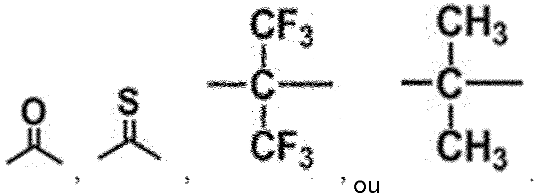

7. Procédé de préparation selon la revendication 5, **caractérisée en ce que** le rapport molaire dudit composé de dianhydride sur ledit composé de diamine est de 1:(0,8-1,2).

8. Procédé de préparation selon la revendication 5, **caractérisé en ce que** ledit filage est un filage au mouillé, dans lequel une filière pour le filage au mouillé présente une dimension d'orifice de Φ 0,04 à Φ 0,4 mm et un nombre d'orifices de 10 à 10 000 ; un rapport d'étirage de filage du filage au mouillé est de 1,1 à 6,0 ; et une vitesse du filage au mouillé est de 5 à 100 m/min.

9. Procédé de préparation selon la revendication 5, **caractérisé en ce que** ledit filage est un filage combiné au mouillé et à sec, dans lequel une filière pour le filage combiné au mouillé et à sec présente une dimension d'orifice de Φ 0,04 à Φ 0,4 mm et un nombre d'orifices de 10 à 10 000 ; un rapport d'étirage de filage du filage combiné au mouillé et à sec est de 1,1 à 7,0 ; et une vitesse du filage combiné au mouillé et à sec est de 5 à 100 m/min.

10. Procédé de préparation selon la revendication 5, **caractérisé en ce que** la température pour effectuer ladite réaction de polymérisation est comprise dans une plage de -10°C à 40°C.

11. Procédé de préparation selon la revendication 5, **caractérisé en ce que** ladite réaction de polymérisation est effectuée dans un solvant polaire aprotique.

12. Procédé de préparation selon la revendication 11, **caractérisé en ce que** ledit solvant polaire aprotique est choisi parmi un ou plusieurs de N,N-diméthylformamide, N,N-diméthylacétamide, diméthylsulfoxyde, et N-méthylpyrrolidone.

13. Procédé de préparation selon la revendication 5, **caractérisé en ce que** la concentration de ladite solution d'acide polyamique de précurseur est de 5 % en poids à 35 % en poids.
